# EUROPEAN PATENT SPECIFICATION

(11) **EP 1 444 589 B1**
(45) Date of publication and mention of the grant of the patent: **16.01.2008**
(21) Application number: 02793899.2
(22) Date of filing: 07.11.2002
(51) Int. Cl.: G06F 13/16

(54) **METHOD AND APPARATUS FOR SIDEBAND READ RETURN HEADER IN MEMORY INTERCONNECT**
METHODE UND VERFAHREN FÜR SEITENBAND-LESEANTWORTKOPF IN EINEM SPEICHER-VERBINDUNGSNETZWERK
PROCEDE ET APPAREIL POUR EN-TETE DE RETOUR DE LECTURE DE BANDE LATERALE DANS UNE INTERCONNEXION DE MEMOIRE

(30) Priority: 12.11.2001 US 11385
(43) Date of publication of application: 11.08.2004
(73) Proprietor: INTEL CORPORATION, Santa Clara, CA 95052 (US)
(72) Inventor: OSBORNE, Randy, Beaverton, OR 97006 (US)
(74) Representative: Goddar, Heinz J.
(86) International application number: PCT/US2002/035920
(87) International publication number: WO 2003/042846

(56) References cited:
- US-A- 6 047 348
- US-B1- 6 189 075
- LI-SHIUAN PEH ET AL: "Flit-reservation flow control" HIGH-PERFORMANCE COMPUTER ARCHITECTURE, 2000. HPCA-6. PROCEEDINGS. SIXTH INTERNATIONAL SYMPOSIUM ON TOULUSE, FRANCE 8-12 JAN. 2000, LOS ALAMITOS, CA, USA,IEEE COMPUT. SOC, US, 8 January 2000 (2000-01-08), pages 73-84, XP010371892 ISBN: 0-7695-0550-3
- BILL DALLY, ET AL.: "Smart Memory Creating a Universal Computing Element" COMPUTER SYSTEMS LABORATORY, [Online] 10 April 1999 (1999-04-10), page 1-32 XP002240472 Stanford University Retrieved from the Internet: <URL:http://www.dyncorp-is.com/darpa/meeti ngs/dis99oct/presentations/SmartMem%20PI%2 0Oct99.ppt> [retrieved on 2003-05-08]

## Description

### FIELD OF THE INVENTION

The present invention pertains to memory connections. More particularly, the present invention relates to a method and apparatus for the optimization of memory read operations via a sideband read return header.

### BACKGROUND OF THE INVENTION

As microprocessors become faster, the need for faster memory interconnects increases. Microprocessor performance has increased dramatically. System performance has generally not kept pace with the increased performance of microprocessors due to a variety of reasons. One reason is the mechanical nature of mass storage devices such as hard disk drives.

Another area affecting system performance is memory external to the microprocessor. This memory may consist of both external high-speed cache and external generally lower speed, but larger in size, main memory. Accesses to external memory may have latency and implementation complexity that affect performance. The ability to reduce latency and reduce implementation complexity is beneficial. A protocol with optimizations for interconnecting with a memory is also beneficial.

The article "Flit-reservation Flow Control" of Li-Shiuan Peh and William J. Dally, High-Performance Computer Architecture, 2000, HPCA 6, In Proceedings of the 6th International Symposium on High-Performance Computer Architecture, Toulouse, France, January 2000, pp. 73-84 discloses flit-reservation flow control in which control flits traverse the network in advance of data flits, reserving buffers and channel bandwidths. Flit-reservation flow control requires that control flits precede data flits, which can be realized through fast on-chip control wires or the pipelining of control flits one or more cycles ahead of data flits.

The document EP 0 870 241 discloses a protocol for communication with dynamic memory.

### BRIEF DESCRIPTION OF THE DRAWINGS

The present invention is illustrated by way of example and not limitation in the figures of the accompanying drawings, in which like references indicate similar elements and in which:

Figure 1 illustrates, according to one embodiment, a network environment in which the present invention may be practiced;

-Figure 2 illustrates, according to one embodiment, a block diagram of a computer system;

Figure 3 illustrates, according to one embodiment, a memory port interface;

Figures 4A and 4B illustrate two embodiments for a read request packet preempting a write request packet;

Figure 5 illustrates, according to one embodiment; dispatching an early read request to memory;

Figures 6A and 6B illustrate two embodiments for sending a read return header;

Figure 7 illustrates, according to one embodiment, a memory port interface;

Figure 8 illustrates, according to one embodiment, a memory port protocol;

Figure 9 illustrates, according to one embodiment, a flit requiring 4 transfers;

Figure 10 illustrates, according to another embodiment, a flit;

Figure 11 illustrates, according to one embodiment, a temporal displacement of a link layer and payload in a flit;

Figure 12 illustrates, according to another embodiment, a memory port protocol;

Figure 13 illustrates, according to one embodiment, a memory command format;

Figure 14 illustrates, according to one embodiment, a device command format;

Figure 15 illustrates, according to one embodiment, a configuration command format;

Figure 16 illustrates, according to one embodiment, an outbound link layer format;

Figure 17 illustrates, according to one embodiment, common inbound link layer format bits;

Figure 18 illustrates, according to one embodiment, a read return header format;

Figure 19 illustrates, according to one embodiment, a write acknowledgement format; and

Figure 20 illustrates, according to one embodiment, a status format.

### DETAILED DESCRIPTION

A method and apparatus for the optimization of memory read operations in memory interconnect via a sideband read return header are described.

In the following description, for purposes of explanation, numerous specific details are set forth in order to provide a thorough understanding of the present invention. It will be evident, however, to one skilled in the art that the present invention may be practiced without these specific details. In some instances, well-known structures and devices are shown in block diagram form, rather than in detail, in order to avoid obscuring the present invention.

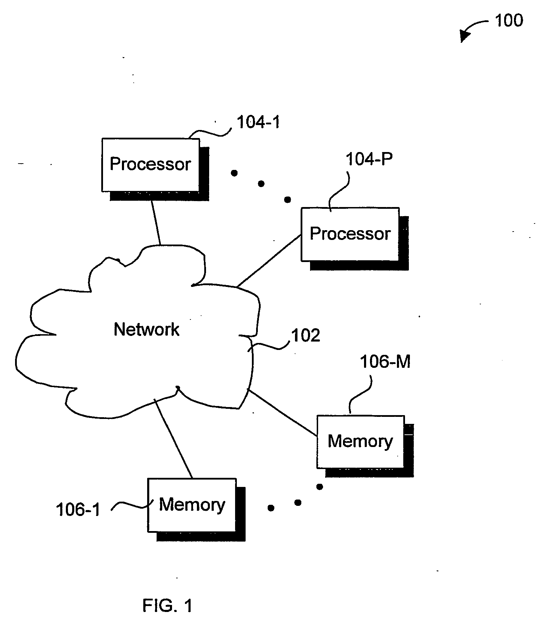

Figure 1 illustrates a network environment 100 in which the techniques described may be applied. As shown, several processors 104-1 through 104-P and memory 106-1 through 106-M are connected to each other via a network 102, which may be, for example, a computer bus. Note that alternatively the network 102 might be or include a local network. The method and apparatus described herein may be applied to essentially any type of communicating means or device whether local or remote.

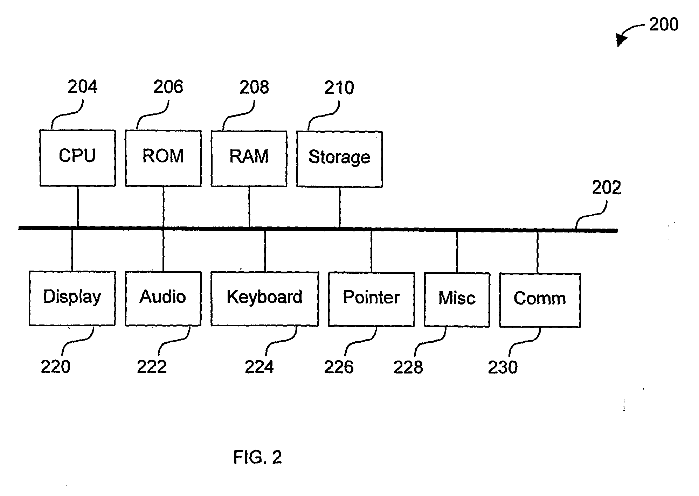

Figure 2 illustrates a computer system 200 in block diagram form, in which, in one embodiment, the present invention may be practiced. Bus system 202 interconnects a Central Processing Unit (CPU) 204, Read Only Memory (ROM) 206, Random Access Memory (RAM) 208, storage 210, display 220, audio, 222, keyboard 224, pointer 226, miscellaneous input/output (I/O) devices 228, and communications 230. The bus system 202 may be for example, one or more of such buses as a system bus, Peripheral Component Interconnect (PCI), Advanced Graphics Port (AGP), Small Computer System Interface (SCSI), Institute of Electrical and Electronics Engineers (IEEE) standard number 1394 (FireWire), Universal Serial Bus (USB), etc. The CPU 204 may be a single, multiple, or even a distributed computing resource. Additionally, the subsystem exemplified by the CPU 204 may have a separate bus to other subsystems, for example, memory. One such example may be for graphics, such as the AGP. Another may be a memory port interface to memory external to the CPU 204 such as ROM 206, RAM 208, etc.

What is to be appreciated, as detailed below, is that a memory port interface and/or protocol that can speed up operations and/or reduce latency and/or complexity is beneficial. For example, in a read request to a memory, it is possible, as is described below, by first sending only that information that is needed to launch a memory read the actual reading of the memory may be started in advance of receiving all of the read request. For example, if the addresses are sent first then a memory subsystem may begin the reading of the memory contents. It may be that the read request only wants a byte out of a word that is being accessed, however, this byte only information may be sent after the addresses and arrive in time for the memory subsystem to then only send the requested byte. In this way, operations may proceed in parallel and/or in advance of others. Similarly, if the memory subsystem knows that it has accessed memory and will have a result after a fixed time, it is possible, as is described below, to send a read return header in advance of the actual data. This may allow the device receiving the data to prepare for it by knowing that it is coming. For example, the read return header may have information that identifies which read request the coming data is associated with, and allow a device to determine where the data is to go before it arrives. By sending this read return header information in advance of the actual data, the device has time to determine the destination for the data before it actually arrives.

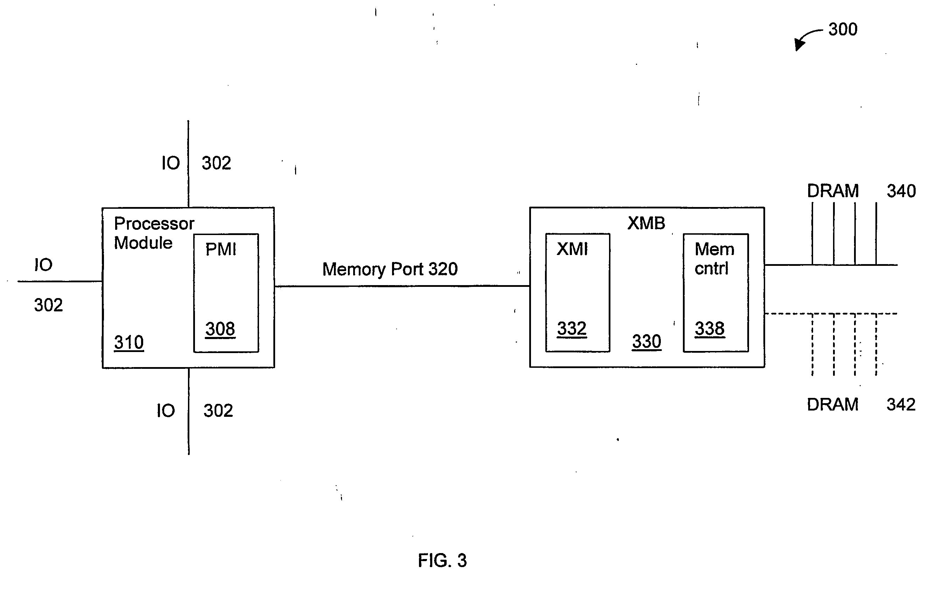

Figure 3 illustrates in block diagram form one embodiment of a memory port interface 300. in this embodiment, the Memory Port 320 is a fast and pin-efficient interconnect between a processor (within Processor Module 310) and its local memory (340 and 342). The protocol layer of the memory port interface (sometimes referred to as memory port protocol) is independent of any particular memory technology, thereby isolating a processor from a memory technology and future memory roadmap issues. The protocol layer has specific features, the subject of this disclosure, to reduce among other things, the latency of memory requests and reduce implementation complexity.

The Processor Module 310 may have interfaces to a variety of other devices through, for example, IO 302, the Memory Port 320, etc. The Memory Port 320 may be considered a private interface from a processor module 310 to an XMB (eXternal Memory Bridge) 330, as shown in Figure 3. The XMB 330 may contain the memory controller 338 and interfaces to native memory, such as the two banks of DRAM 340 and 342. Consequently, the XMB 330 encapsulates memory dependencies such as memory type (technology and speed), memory organization (DRAM size, number of DRAMs per module, and number of channels), and memory control (timing, refresh, and power management).

The Memory Port 320 may consist of both a physical interconnection and a protocol. The physical interconnection may consist of, or be considered, several parallel interconnects. For example, there may be a main link for data and another link layer for control (sometimes called a sideband). The protocol may consist of commands, data, responses, etc. communicated over the physical interconnection. For example, memory port commands may consist of: memory reads and writes; device reads and writes; and configuration reads and writes. In addition a link layer may have inbound and outbound information such as read return headers, write acknowledgments, status, etc.

Memory Port traffic may consist of memory, device, and configuration read and write commands. To minimize XMB 330 complexity, for one embodiment, the Processor Memory Interface (PMI) 308 initiates all data transfers. To further reduce complexity, for one embodiment, the Memory Port 320 does not support data transfers initiated by the XMB 330. In one embodiment, complexity is reduced by the Memory Port 320 not supporting I/O or graphics devices in or via the XMB 330. Additional reduction in complexity may be achieved by the Memory Port 320 not supporting any coherency traffic.

In the Processor Module 310, the Memory Port 320 includes functionality encapsulated in the PMI 308. The PMI 308 may include such things as write buffers, flow control, error handling, and control and status registers, etc. At the XMB 330, the Memory Port 320 may include such functionality encapsulated in the external Memory Interface (XMI) 332. The XMI 332 may also include read and write buffers, error logging, control and status registers, etc.

In one embodiment, the Memory Port 320 may exploit the knowledge that the memory traffic is only memory reads and writes and may thus optimize for memory requests, maximizing performance while minimizing complexity. This disclosure describes two such optimizations in Memory Port 320 relating to reducing the latency of launching read requests to memory and a third optimization related to the use of a sideband read return header in the Memory Port 320.

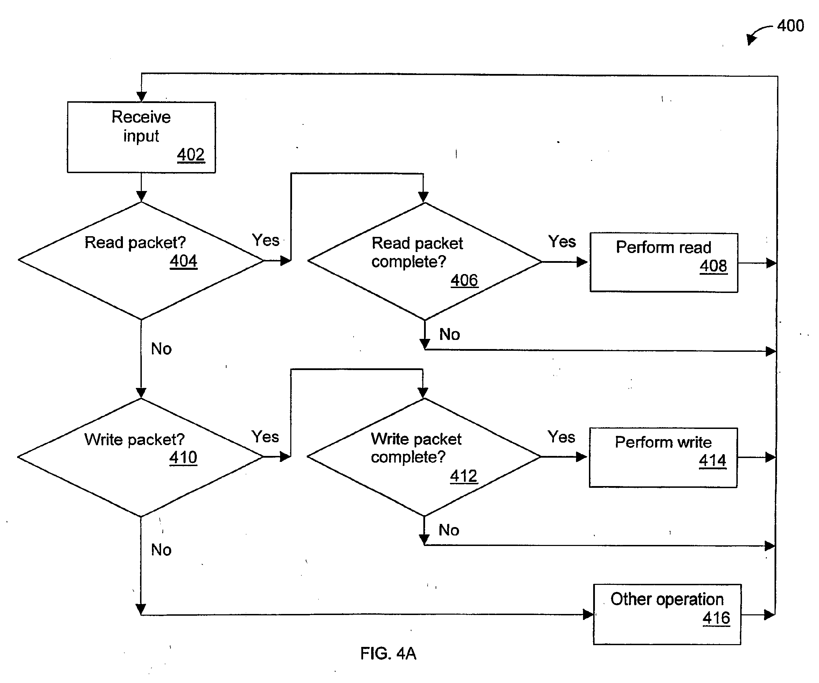

Figure 4A illustrates 400 how a read packet may preempt a write packet. A read packet may contain a read command and an address or range of addresses to read. Similarly, a write packet may contain a write command, an address or range of addresses to write, and the data to write (write data). The read and/or write packet, because of the amount of information being transferred and the width of the communications channel may be sent in more than one transfer. Because, the write packet has additional information in the form of the data to be written, it can be seen that the write packet may require more transfers than the read packet.

At 402 an input is received. At 404 it is determined if the input received at 402 is part of a read packet. If it is part of a read packet then at 406 a check is made to see if the read packet is complete. If the read packet is complete, then a read is performed at 408, then at 402 another input is received. If at 406 it is determined that the read packet is not complete, then at 402 another input is received.

If at 404 it is determined that the received input 402 is not part of a read packet, then it is determined at 410 if the input received at 402 is part of a write packet. If the received input 402 is not part of a write packet then at 416 some other operation is performed, then at 402 another input is received. If at 410 it is determined that the received input 402 is part of a write packet, then at 412 a determination is made if the write packet is complete. If the write packet is complete, then a write is performed at 414, then at 402 another input is received. If at 410 it is determined that the received input at 402 is not part of a write request packet then some other operation 416 may take place and then back to 402 to receive input.

Thus, it is possible for a read packet to preempt a write packet. For one embodiment, the read packet consisting of a read command and the address or addresses to read may be a single transfer or a single flit. The write packet consists of a single transfer having the write command, the address or addresses to write, and other, possibly multiple, transfers with the associated write data. For convenience in description, the read packet containing the read command and the address or addresses to be read is referred to as a read request. Thus, a read request and a read packet convey the same information. For convenience in description, that part of the write packet containing the write command and the address or addresses to write is referred to as a write request. The data part of the write packet is referred to as the write data. Thus, a write packet contains a write request and write data.

So, for example, assume a write request is received at 402. It goes to 404 and not being part of a read packet goes to 410. At 410 it is part of a write packet and so proceeds to 412. At 412 it is determined that it is only the write request and that the write data has not been received, so the write packet is not complete, so it then goes back to 402. If at 402 a read request is now received, then it goes to 404 where it is determined that the read request is part of a read packet so it proceeds to 406. At 406 a determination is made as to if the read packet is complete. In this embodiment, we have defined the read request to contain the complete read packet and so at 408 a read is performed, and then back to 402. In this example then, the write operation started (by receipt of the write request) has not been completed and the read request has preempted the write.

Following the flow of Figure 4A, one is to appreciate that the read request may preempt a write anywhere up until the last of the write data is received. Thus, for example if a write packet contains the write request and 4 transfers of write data, a read request may preempt a write packet if received after; the write request, the first, second, or third write data.

In another embodiment, the read request may not contain a complete read packet. In such an embodiment, a check for a complete read packet at 406 may not be complete and under that circumstance, it would proceed to 402 to receive another input. If and when a complete read packet was received then at 406 it would proceed to 408 and perform the read, and then return to receiving an input at 402.

Allowing the read request being received after the write request or write data to preempt the earlier received write request or write data results in the read being executed ahead of the write. This allows the memory to respond to the read request faster than if it had to first respond to the write and then the read request.

It is to be understood that the agent sending the read and/or write requests may prevent ordering hazards. That is, the sending agent may want to limit how the read and write requests may be issued. For example, the sending agent may decide for the sake of reducing complexity that one read request may not preempt another read request.

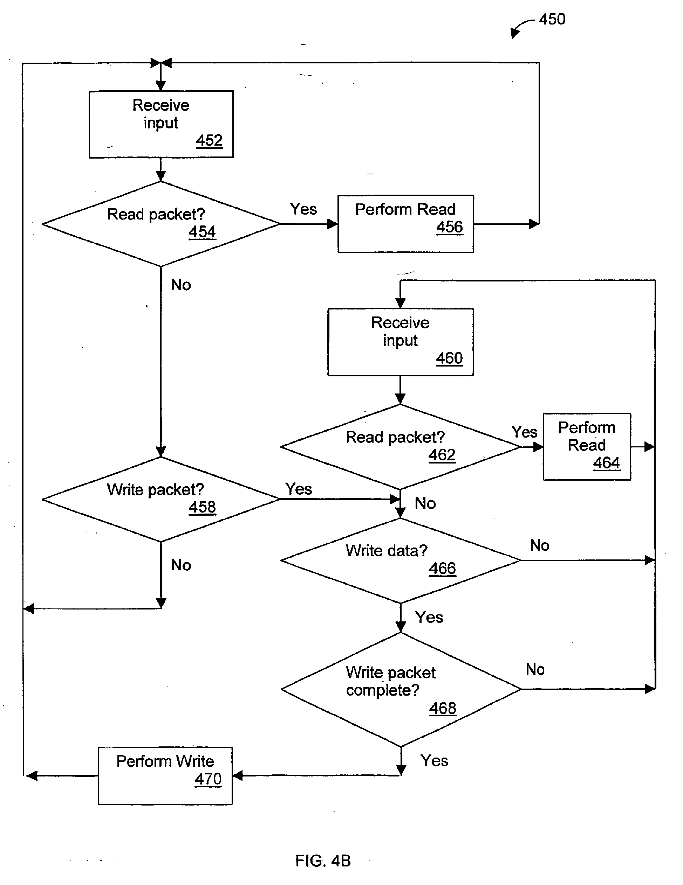

Figure 4B illustrates 450 another embodiment of the present invention in which a read packet may preempt a write request. In this example, we consider only read and write packets. Additionally, Figure 4B illustrates an embodiment in which a write packet may be preempted by a read request but not by another write request as was possible in Figure 4A. In Figure 4B an input is received at 452. At 454 a check is made to see if it is a read packet. If it is a read packet then at 456 a read is performed and we return to receiving an input at 452. If the input received at 452 is not a read packet then at 458 is it checked to see if tis a write packet. If it is not a write packet then we return to receiving an input at 452. On the other hand, if at 458 the packet is a write packet then we enter an "inner loop" of operations labeled 460-470.

This inner loop allows for read packet preemption as can be seen at 460 receiving an input 462 checking it for a read packet and if it is then performing the read 464 and going back to receiving an input 460. However, the only way back to the outer loop (452-458) is when a write packet is complete 468 and a write is performed 470. Upon entering the inner loop from 458 a check is made at 466 to determine if there is write data. If there is no write data then we proceed to receive input at 460. If there is write data then at 468 a check is made to see if the write packet is complete. If the write packet is not complete then we proceed to receive input at 460. However, if the write packet is complete, then at 470 a write is performed and then we proceed to receive input from the outer loop at 452. Thus, Figure 4B illustrates an embodiment in which only a single write packet is allowed to be preempted by a read request (in a read packet) or multiple read requests (i.e. loop 460, 462, 464 being traversed one or more times before a write at 470).

In the discussion above, we detailed how, for example, the read request may contain a read command and the address or addresses to be read. Additional, other information may be conveyed as well, for example, error correcting bits to assure the integrity of the request, control information, etc. For convenience in discussing the invention, the term 'flit' is used to denote a unit of information transmission associated with an entity or operation and may consist of one or more transfers. Packets may consist of one or more flits. So, for example, a read request packet may consist of a single flit denoting all the information associated with the read request. This information, depending upon a specific implementation, may require more than one transfer to completely send. For example, if the read request flit contained 32 bits of information and the computer bus could effect a 16 bit transfer, then two transfers would be required to effect the transfer of the read request flit. Described below are more details and examples of flits and transfers.

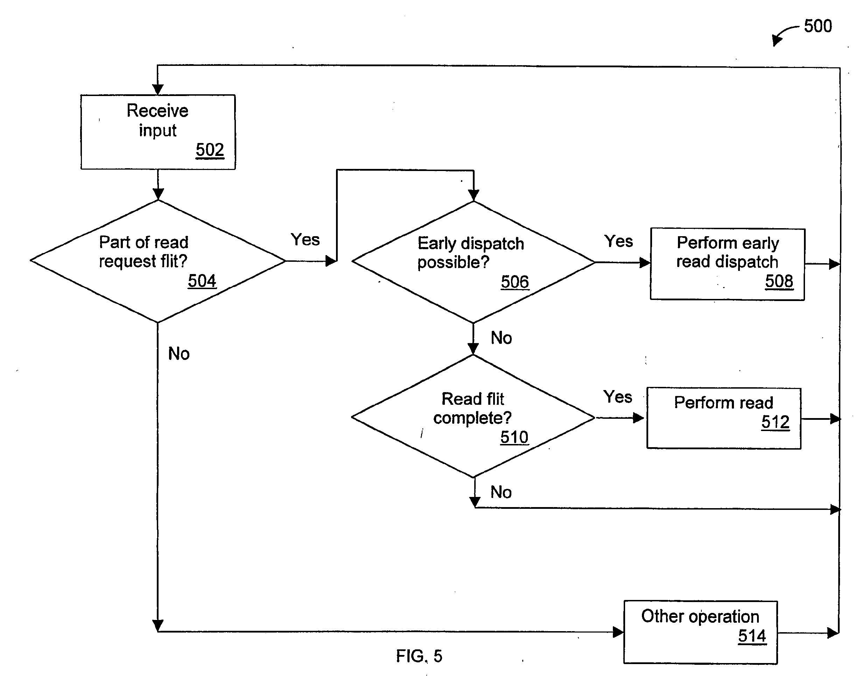

Figure 5 illustrates 500 dispatching an early read request to memory. Here at 502 an input is received. At 504 it is checked to see if the received input at 502 is part of a read request flit. If it is, a check is made at 506 to see if an early dispatch of the read is possible. If an early dispatch is possible then at 508 a early read dispatch is performed and then back to 502 to receive input. If an early dispatch is not possible then at 510 a check is made to see if the read flit is complete. If it is complete, then at 512 a read is performed and then back to 502 to receive input. If the read flit is not complete then back to 502 to receive input. If at 504 it is determined that the received input at 502 is not part of a read request flit then some other operation 514 may take place and then back to 502 to receive input.

During receiving the read request flit, a dispatching of an early read request to memory may be made. Thus, the entire read request flit does not have to be received before dispatching an early read request to memory. By not having to wait for the entire read request flit to be received, this allows the memory to respond to the early read request faster than if it was necessary to wait for the entire read request flit to be received before issuing a read request. Thus if the first portion of a flit contains an early read request the memory may be accessed while at the same time the second portion of a flit possibly having modifier information for the memory contents is being received. This modifier information may affect what memory data is eventually sent.

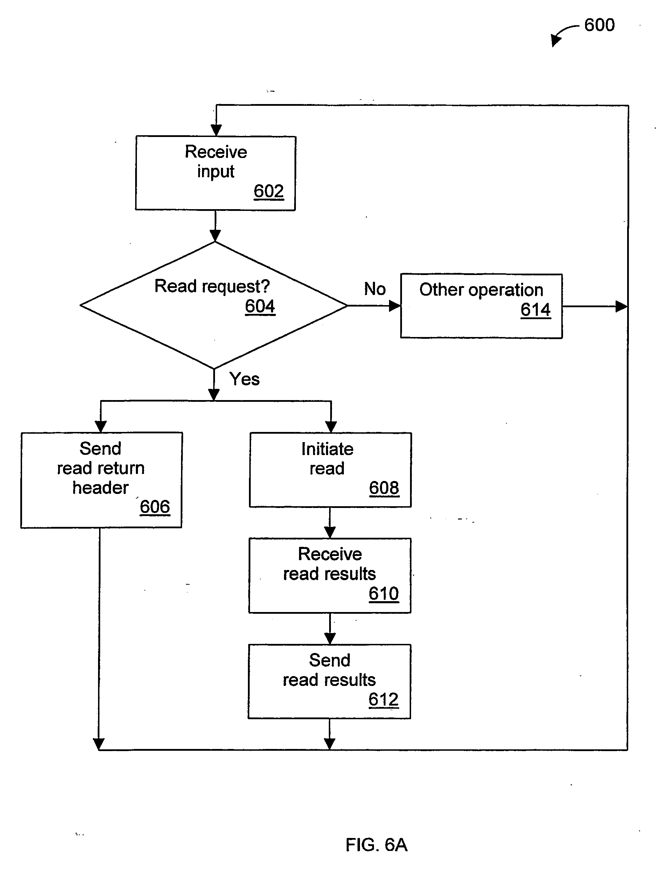

Figure 6A illustrates 600 sending a read return header 606. Here at 602 an input is received. At 604 it is checked to see if it is a read request. If it is not a read request then an other operation 614 is possibly performed and back to 602 to receive input. If the input received at 602 is determined at 604 to be a read request then two things happen. First, at 606 a read return header is sent, and back to 602 for input. Second a read is initiated at 608, read results are received at 610, the read results are sent at 612, and then back to 602 to receive input. Thus, for example, a memory read initiated at 608 and a read return header sent at 606 may happen at substantially the same time and/or the read return header may just precede the sending of the read results. Thus, the entire read result does not have to be received before sending a read return header 606. By not having to wait for the entire read result, this allows the memory and/or system to send a read return header 606 earlier than if it was necessary to wait for the entire read request to be received before sending a read return header.

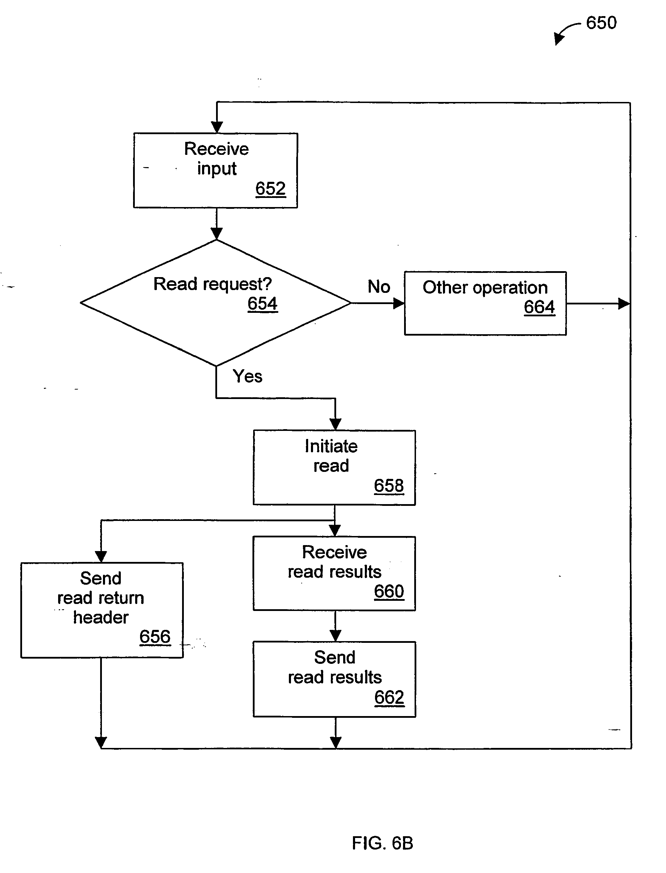

Figure 6B illustrates 650 another embodiment for sending a read return header 656. Here at 652 an input is received. At 654 it is checked to see if it is a read request. If it is not a read request then an other operation 664 is possibly performed and back to 652 to receive input. If the input received at 652 is determined at 654 to be a read request then a read is initiated at 608. At this point two things happen. First, at 656 a read return header is sent, and back to 652 for input. Second, read results are received at 660, the read results are sent at 662, and then back to 602 to receive input. Thus, for example, a memory read initiated at 658 results in a read return header sent at 656. This header is sent in parallel with receiving 656 and sending the read results 662 and so the read return header may precede the sending of the read results. Thus, the entire read result does not have to be received before sending a read return header 606. By not having to wait for the entire read result, this allows the memory and/or system to send a read return header 656 earlier than if it was necessary to wait for the entire read request to be received before sending a read return header.

In one embodiment of the read return header (sent at 606 or 656), the read return header has an identifier encoded within it that relates it to the read request that caused it to be sent. In this way, for example, PMI 308 may identify via the read return header identifier which read request it is associated with (and the resulting forthcoming data).

It is to be appreciated, that the actual path for transferring the read return header sent at 606 or 656, while possible in the main data path is preferably in a sideband and preferably with a known fixed offset from the data. That is, the use of a sideband path (link layer) parallel to the data path where the sideband path carries the read return header in advance of the associated read data may allow the receiving device to determine where the data is to go in advance of receiving the data. Thus, a reduction in latency may be achieved if the read return header is sent in advance of the data.

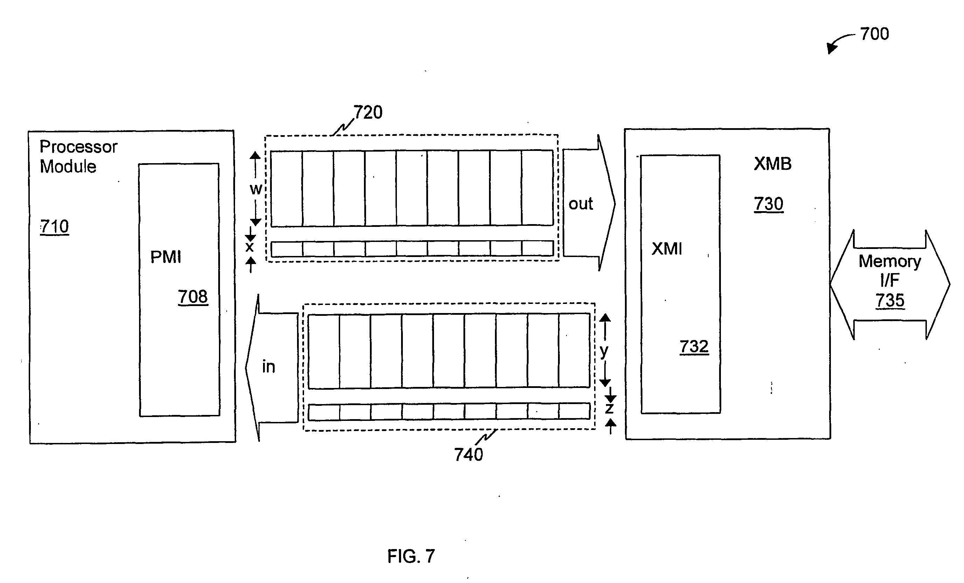

Figure 7 illustrates one embodiment of a memory port interface 700. In -this embodiment, the memory port is a full duplex interconnect (memory port link 720 and 740). In the outbound direction (away from the processor module 710 and the PMI 708) the memory port link 720 is composed of two streams of information. One stream is a data stream of width w and the second stream is a link layer stream of width x. As above, for discussing the invention, a convenient grouping of associated data and link layer information is called a flit. In the inbound direction (into the processor module 710 and the PMI 708) the memory port link 740 is composed of two streams of information. One stream is a data stream of width y and the second a link layer stream of width z.

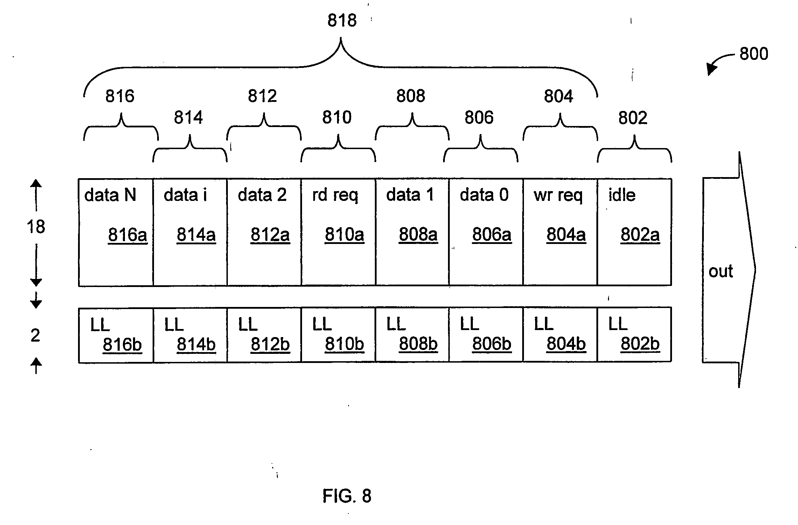

For example, Figure 8 illustrates one embodiment of a memory port protocol 800. In this embodiment, flit 802 is composed of data indicating an idle 802a and link layer (LL) 802b information. In similar fashion, flits 804 through 816 (generically 8XX) are composed of respective 8XXa and 8XXb parts. This embodiment illustrates one embodiment of a flit having 80 bits where the data bus width w is 18 bits wide and the link layer bus width x is 2 bits wide. The embodiment illustrated requires 4 transfers for a single flit, and there are 72 bits in the payload and 8 in the link layer.

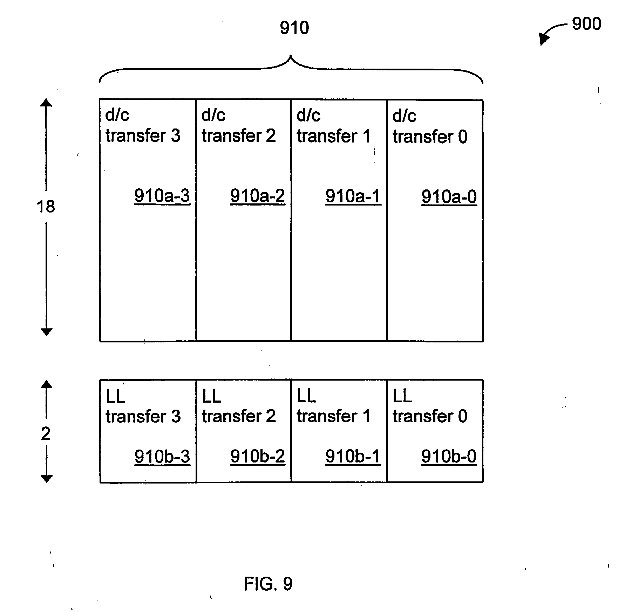

For example, Figure 9 illustrates a flit 900 requiring 4 transfers. Here, the flit 910 has 72 bits of data and/or command (d/c) information and 8 link layer (LL) bits of information. Here, the transfers are done 20 bits at a time 910a-0 and 910b-0, then 910a-1 and 910b-1, etc. While, Figure 9 shows a d/c and LL transfer occurring in the same time frame, this is not a requirement. That is, LL data that may be associated with a particular transfer within a flit may be temporally displaced from the respective d/c transfer. Additionally, the temporal displacement may be across flit boundaries.

The link layer (LL) may have, for example, control bits and cyclic redundancy check (CRC) bits. The control bits, may represent, for example, head, tail, or idle.

Referring back to Figure 8, it should be noted that a write packet 818, would normally contain a write request and associated data only. However, in the present invention, as illustrated in Figure 8, no such restriction is required. Write packet 818 is illustrated as having within it a write request flit 804, associated data flits 806, 808, 812, 814, and 816, as well as a read request packet flit 810.

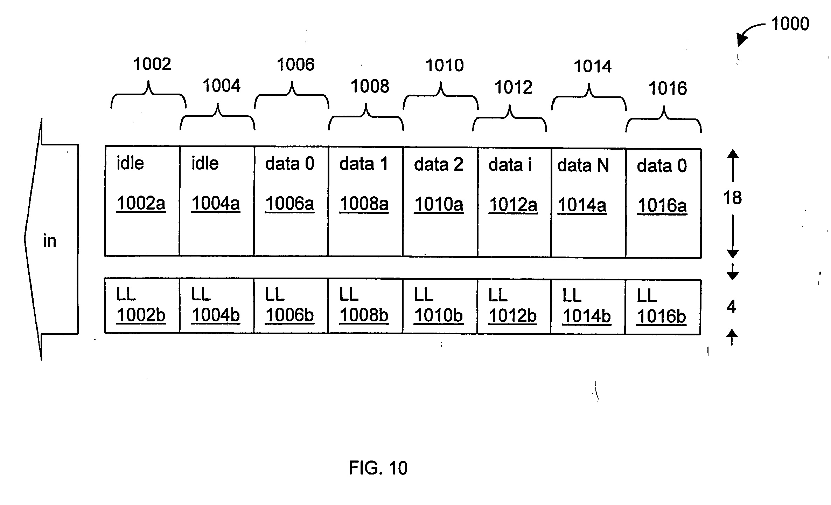

Figure 10 illustrates another embodiment of a flit 1000 having 96 bits where the data bus width y is 18 bits wide and the link layer bus width z is 4 bits wide. This embodiment requires 4 transfers for a single flit, and there are 64 data bits, 8 check bits, and 16 bits in the link layer. Each flit 1002 through 1016 may have a payload packet 10xxa and an associated link layer (LL) packet 10xxb. Figure 10 may represent an input to a processor module. The link layer (LL) may have, for example, link layer control bits and CRC bits. The control bits may be, for example, read header, write header, data, data with tail, idle, write ack (acknowledgement), flow control, etc.

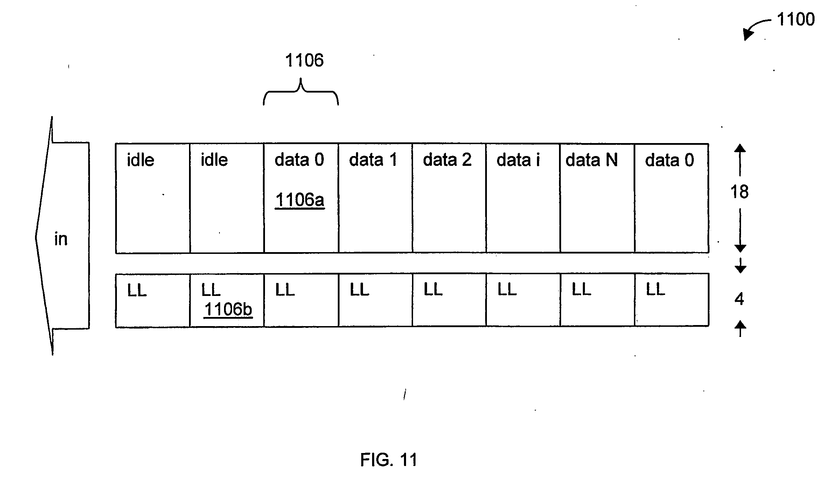

What is to be further appreciated is that while a LL control is associated with a payload, it does not have to be sent at the same time. For example, a processor module may be able to improve performance if it has advance information that read data is to arrive shortly. Thus, for example, an early read header in the LL may provide such an indication. For example, in Figure 10, the LL associated with flit data 1006a may be at a position earlier in time, for example, at position 1004b. Thus, a flit, such as 1106 may contain payload at position 1106a and a LL control at position 1106b, as shown in Figure 11. Thus, Figure 11 illustrates a temporal displacement of a link layer and payload in a flit 1100.

The inbound sideband link layer (LL) (into the PMI 308) may also contain information on other transfers and/or transactions. For example, the LL may contain write acks to acknowledge outbound write commands, stop bits for outbound flow control feedback, status indications (idle vs. data payloads, etc.), etc. Also, a LL associated with a flit may convey more than a single piece of information, for example, the LL coding may indicate either an idle payload or a non-idle payload and in addition whether it is a read return header, a write ack, a stop indication, idle control, etc. Additionally, it is to be appreciated that, as mentioned above, this information may be temporally shifted.

Temporally shifting the information may allow the reduction in complexity of the interfaces. For example, putting a read return header in-band with the read return data may impose additional functionality in the XMI 332 because the XMI 332 may have to multiplex header and data information and the XMI 332 may have to buffer incoming read return data to rate match the memory read bandwidth with the slightly higher inbound Memory Port bandwidth necessary to compensate for the bandwidth overhead of the inline header. This additional functionality may imply additional complexity and likely additional latency.
Instead, by putting the read return header in the side-band temporally shifted may enable the XMI 332 data path to operate at the same frequency as a memory bus, thereby permitting the XMI 332 to operate with no buffering or multiplexing in the read return data path. Thus, the use of a sideband path (link layer) parallel to the data path where the sideband path carries the read return header in advance, possibly non-contiguously, of the associated read data may allow steering and control logic to operate in advance of the received data. A reduction in latency may be achieved if the read return header may be sent in advance of the data. The header may precede the read return data by 0 flits or more (the read return offset may be determined at initialization time). An early read return header permits the processor to move the header decode and data steering logic out of the critical path and drive incoming read return data directly to the appropriate destination within the processor.

The time (offset) by which the read return header may be sent in advance of the data may be fixed at some point in time and/or dynamic. For example, a fixed delay may be determined at system initialization time. Alternatively, the system may determine this during operation and may make it static. Another embodiment may have the offset time to the data encoded within the read return header. Thus, one skilled in the art will recognize that there are many possible embodiments.

Temporally shifting information may allow the reduction in complexity of the PMI 308 interface as well. That is, the PMI 308 may reduce complexity and/or latency if it sends information via the sideband in advance of data on the main data path. One skilled in the art will appreciate that reduced latency and/or complexity may be achieved in the outbound direction as well as the inbound direction.

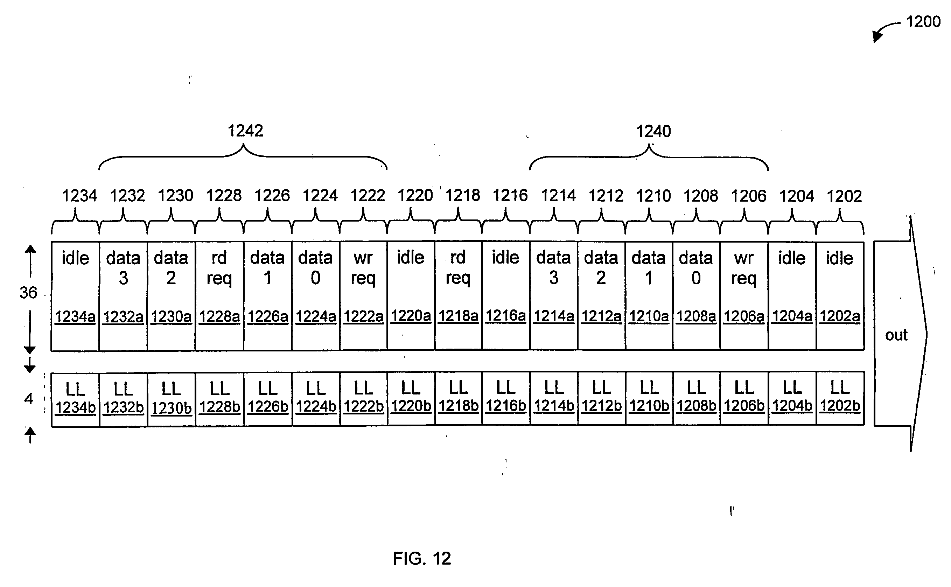

Figure 12 illustrates another embodiment of a memory port protocol 1200 where the data and command width is 36 bits and the link layer is 4 bits.
Idle flits 1202, 1204, 1216, 1220, and 1234 may have an idle payload in their respective "a" part (1202a, 1204a, 1216a, 1220a, and 1234a) and a link layer (LL) control code in their respective "b" part (1202b, 1204b, 1216b, 1220b, and 1234b). A normal write packet 1240 has only write associated data, such as a write request 1206 fit and write data flits (1208-1214). Each flit has a LL control that may indicate additional information. For example, data 0, data 1, and data 2 (1208a, 1210a, and 1212a respectively) may have information in the link layer (LL) control (1208b, 1210b, and 1212b respectively) to indicate that the data is write data. LL 1214b may indicate that 1214a is write data and the tail of the write data. LL 1206b may indicate additional information about the write request 1206a command.

Flit 1218 shows a read request not preempting a write packet. Read request flit 1218 has an associated read request 1218a which includes a read request identification and possible additional information in the associated link layer 1218b. Alternatively, the read request identification and/or additional information may be located in 1218a and/or 1218b.

A write packet preempted by a read request is illustrated at 1228. Here, a write request packet having a write request flit 1222 and write data flits 1224, 1226, 1230, and 1232 has between the data 1 flit 1226 and the data 2 flit 1230 a read request flit 1228. This read request flit 1228, having a read request 1228a and an associated link layer 1228b has preempted the write request flit 1222.

As explained above, for the normal write packet 1240, the write request flit 1222, and associated write data flits 1224, 1226, 1230, and 1232, have an "a" payload and an associated "b" link layer control.

Detailed in the discussion below are possible embodiments for commands, field bit definitions, link layer control, etc. What is to be appreciated is that these specific examples are not to be considered limiting the prior discussion of the present invention. These examples are for illustrative purposes only.

Referring again to Figure 3, the PMI 308 may issue Memory Port 320 memory commands and the configuration commands. In this example, the XMI 332 does not issue any commands over Memory Port 320. Additionally, partial memory writes are not shown.

There are three general types of commands: memory, device, and configuration.

Memory commands, such as read, write, and cancel, generally target main memory, either connected to and/or contained within the XMB 330 that behave as pure memory (e.g. DRAM).

Device commands, such as read and write, generally target memory locations that do not behave as pure memory. For example, writing to flash memory and/or device registers mapped into memory space where the writes (and sometimes) reads have side effects. In such cases each write command may want to execute exactly once at the target. Furthermore, such commands may want to execute at the target in the same order in which the commands are issued by the source.

Device commands are similar to memory commands and may have a size field or bits indicating the data transfer size. Possible sizes may include, for example, 1 to 8 bytes, 16, 32, or 64 bytes, and/or a full cacheline of data. Regardless of the data transfer size, the command payload may be a full cacheline in size, padded as necessary with ones and/or zeroes from the data transfer out to a cacheline.

Device commands may also have mask bits to support partial reads and/or writes. For a read command, for example, this mask may indicate which byte locations to read, and which bytes in a read return are valid. For a write command, the byte mask may indicate which bytes in the payload are valid.

Configuration commands, such as read and write, may be considered a special class of device commands that may target devices and/or registers, for example, locations in PCI configuration space. Additionally, because of the nature of the commands, the PMI 308 may choose to have only one configuration command outstanding at a time.

All the command types may share a common base format. For example, a command flit may contain a 72 bit command encoded in the flit payload as 64 command bits and 8 check bits. To minimize the latency for memory read requests, the read command format may have all the critical information in the first half of the flit, thus enabling dispatch of a read request to memory before the XMI 332 receives the entire flit.

An early indicator, for example a bit, in the command may indicate whether the first half of the flit contains sufficient information to launch a memory read request or whether the XMI 332 must accumulate the information in the entire flit. This bit may only be set for memory read commands; otherwise the XMI 332 may incorrectly launch memory read requests for configuration commands, device commands, or memory write commands. However, not all memory read commands may have the early bit set active. For example, any memory read command with specific scheduling information in the second half of the flit, e.g. stream identification or priority, may have the early bit inactive to force the XMI 332 to consider this information before dispatching a memory read request.

The command destination bits may indicate the command type: memory command, device command, or configuration command.

In one embodiment, the transaction (tag) bits, together with the Read/Write bit, comprises a unique ID for each command. A unique ID may not be re-used for a subsequent command until either the PMI 308 has received a response for any prior command of that type with the associated transaction ID or the PMI 308 has determined that any prior command of that read/write (rd/wr) type with that transaction ID has timed out.

The cancel bit is a modifier which indicates if a memory read command is canceling a previous memory read command.

In the case of memory commands, the offset bits identify an offset from the memory location specified by the address bits for memory reads and writes.
In the case of device commands, this offset coupled with the address bits may specify the target location (e.g. to a memory mapped device register).

As mentioned above, the stream id/priority may be defined to encode the stream to which a memory read command belongs or the memory read command priority to enable the XMI 332 to apply different scheduling policies to different memory requests. For example, this field may indicate if a memory command belongs to an isochronous stream and therefore may require a specific service time to meet the isochronous data delivery deadline time.

-The mask bits may be a bit vector byte mask indicating which bytes are valid in partial reads and writes for device and configuration commands.

The size bits may indicate the data transfer size for device and configuration commands. Possible data transfer sizes for such commands are: 1 to 8 bytes (in conjunction with the mask bits), 16 bytes, 32 bytes, 64 bytes, etc., and full cacheline size.

The integrity of each command may be protected using an Error Correcting Code (ECC) over the 72 bit command with check bits distributed in the second half of the flit. However, until the entire command flit has been received and the ECC error check has been completed the XMI 332 may wish to regard the early bit as a hint and any memory read request dispatched early for the command as speculative. Consequently, the XMI 332 may want to ensure that it has sufficient resources to handle such a speculative early memory read request before it is dispatched. For example, the XMI 332 must ensure that dispatching an early read request cannot lead to an overflow of the memory controller read request queue.

For the write command fields, to simplify encode and decode in this embodiment, these fields may be the same as for the read command except for the offset and code fields.

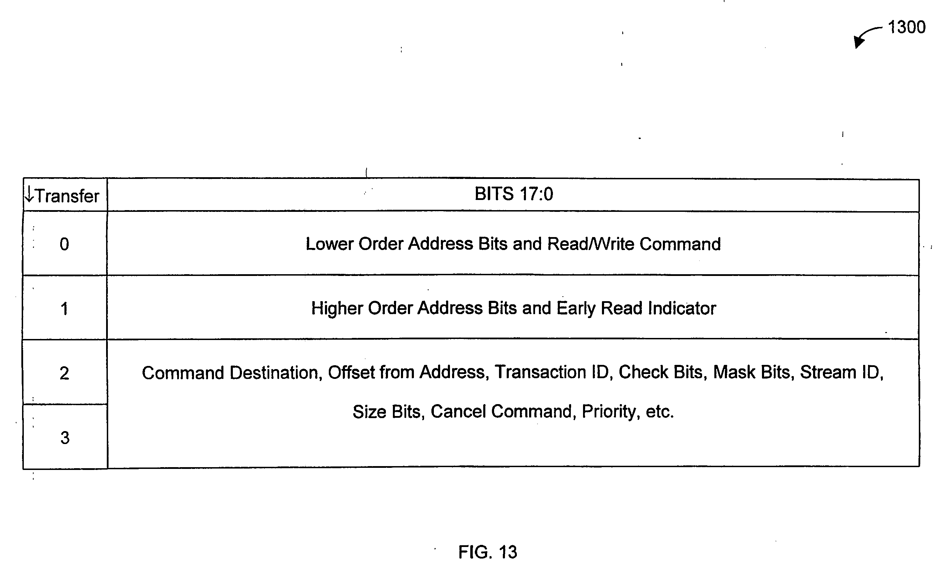

Figure 13 illustrates one embodiment of a memory command format 1300. In this example, we assume a physical layer with four transfers per flit and 18 bits per transfer. That is, the command has 72 bits delivered in 4 transfers. Assume further that each transfer (Transfer 0,1,2,3) corresponds to one bit cell time across the interconnect. For example, during the first transfer (Transfer 0), lower order address bits and a read/write command may be transferred. During Transfer 1 higher order address bits and an early read indicator may be transferred. During Transfers 2 and 3, bits indicating command destination, offset from address, transaction ID, check, mask, stream ID, size, cancel command, priority, etc., may be transferred.

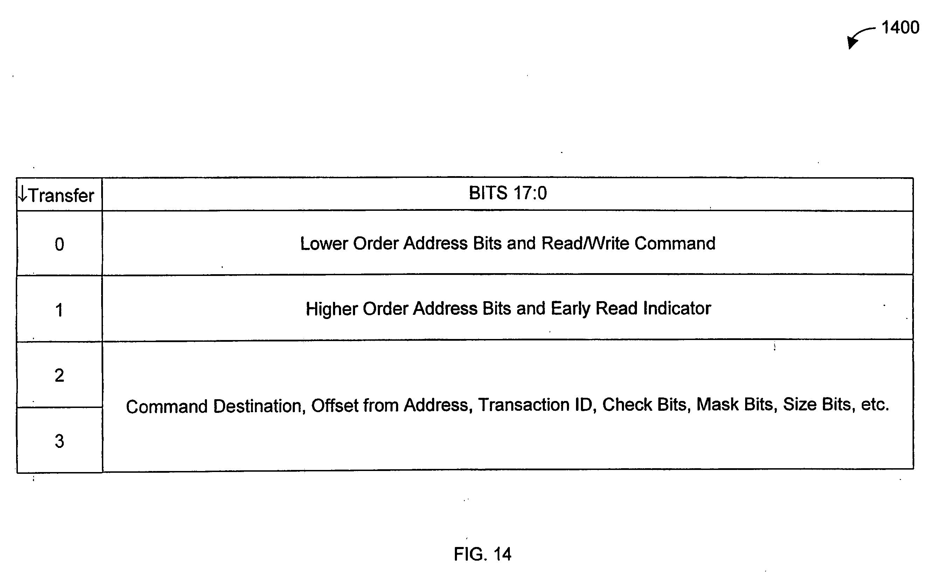

Figure 14 illustrates one embodiment of a device command format 1400 wherein we assume a physical layer with four transfers per flit and 18 bits per transfer. Here, during Transfer 0, lower order address bits and a read/write command may be transferred. During Transfer 1 higher order address bits and the early read indicator may be sent. During Transfers 2 and 3, information may be transferred indicating command destination, offset from address, transaction ID, check bits, mask bits, size of transfer, etc.

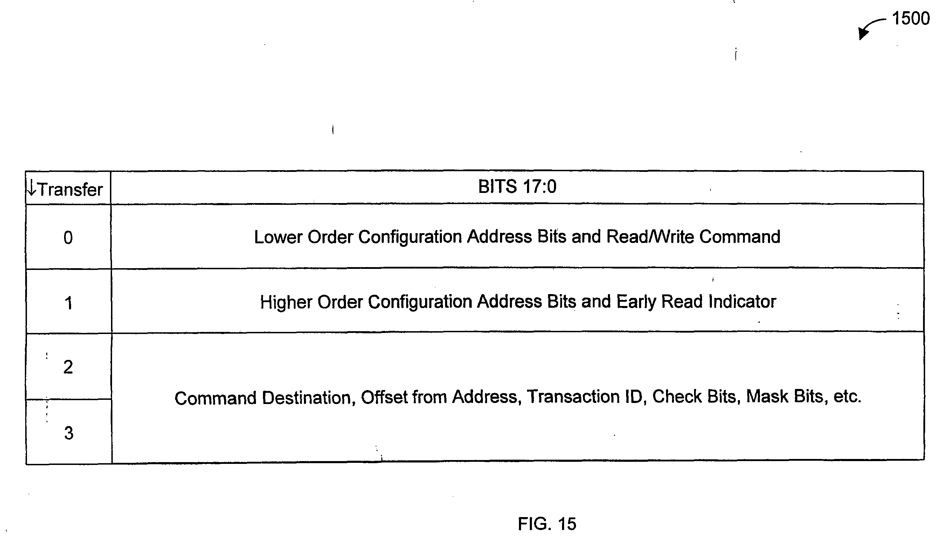

Figure 15 illustrates one embodiment of a configuration command format 1500 wherein we assume a physical layer with four transfers per flit and 18 bits per transfer. During Transfer 0, lower order configuration address bits and a read/write command may be transferred. During Transfer 1 higher order configuration address bits and the early read indicator may be sent. During Transfers 2 and 3, information may be transferred indicating command destination, offset from address, transaction ID, check bits, mask bits, etc.

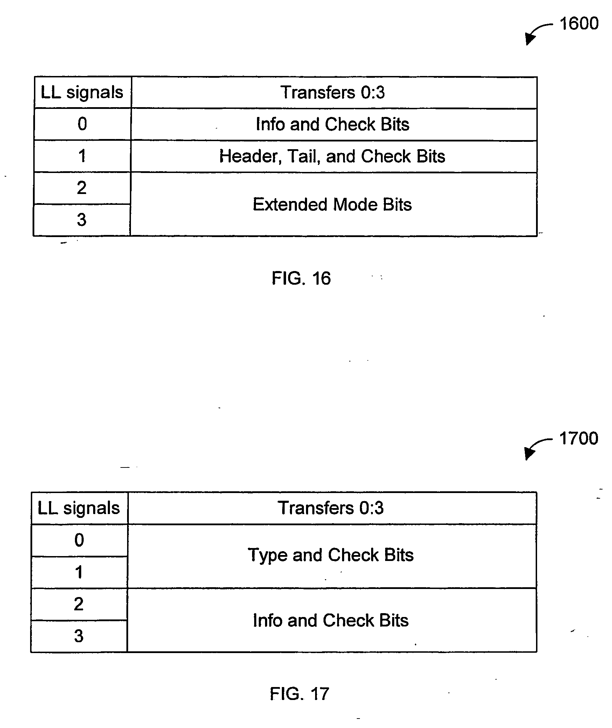

As previously mentioned, the link layer (LL) has both an outbound format and an inbound format. Figure 16 illustrates one embodiment of an outbound link layer format 1600. The base outbound link layer format may have, for example, 8 bits per flit. This base format may be optionally extended, for example, by another 8 bits to a total of 16 bits per flit. Figure 16 shows the 16 bits per flit format. LL signal 0 is used for communicating information (info) bit and check bits sent during Transfers 0:3 (four transfers: 0, 1, 2, and 3). The info bit(s) may indicate if the flit is non-idle, i.e. whether the flit contains command or data, or is idle. LL signal 1 is used for communicating header, tail, and check bits. The tail bit indicates the end of the packet and the header bit indicates if the flit contains a command. The header and tail bits may encode other states, such as: flit payload is data and is not the last data payload in the packet; flit payload is a data payload and the last flit of the packet; flit payload is a write command; and flit payload is a read command and the last flit of the packet. The check bits comprise a CRC computed over the 16 bits of the link layer format. The extended mode bits are sent on LL signals 2 and 3.

Extended mode bits may also be in the link layer and may be used for data flits with lockstep Memory Ports. To support error checking in the XMI (332) with lockstep Memory Ports, the extended mode bits may encode the error syndrome of the half cacheline sent to the other Memory Port.

An inbound link layer may have a variety of formats. For example, in one embodiment, there may be four different inbound link layer formats: read return header, write acknowledgment, status, and configuration. In the embodiments described below, it is possible for these four link layer formats to share a number of bits in common. Figure 17 illustrates one embodiment of common inbound link layer format bits 1700.

The info bit indicates if the flit payload is non-idle, i.e. contains data, or is idle. The check bits comprise a CRC computed over the 16 bits of the link layer format.

The type bits may indicate one of four different inbound link layer formats, such as: read return header; write acknowledgement; status; and configuration.

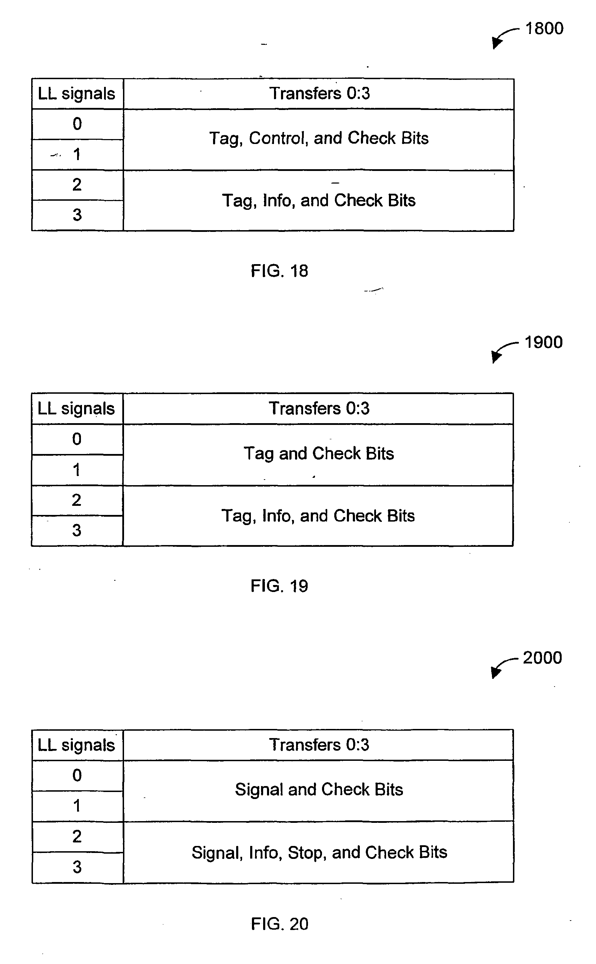

Figure 18 shows one embodiment of a read return header format 1800. Here, the tag bits, may encode a transaction ID in, for example, little endian order. The control bit may indicate that the read return has data and the first data payload flit begins a given offset flits from the beginning of the current flit. If the offset is 0, the first data payloads begins in the current flit. The control bit may also indicate that the read return header is a nack (short for negative acknowledgement), in which case there is no associated data. The read return nack informs the PMI 308 that the XMI 332 has cancelled the original memory read command as a result of receiving a read cancel command and thus the PMI 308 must not expect read return data for the read command. The XMI 332 only sends a read return nack if it cancels a read command. Thus, the XMI 332 does not send a read return nack if it discards a read cancel command without canceling a read command.

Figure 19 shows one embodiment of a write acknowledgement format 1900. In this example, except for the absence of the control bit, this format is the same as for the read return header discussed above.

Figure 20 shows one embodiment 2000 of a status format. The Memory Port 320 may use the status format for three functions: return of outbound flow control information to the processor; conveying an asynchronous signal; and indicating the link layer is idle for a flit.

If the stop bit is active, the processor must not send any write commands to the-XMI 332 until the processor receives a subsequent flit with link layer status format and with the stop bit inactive. The XMI 332 asserts the stop bit when it wishes to flow control incoming write commands, e.g. when the XMI 332 write buffer exceeds a given threshold. If the stop bit is inactive, the processor may send write commands to the XMI 332.

The signal bits may comprise a signal code. The XMI 332 may asynchronously signal some action by the processor, in parallel with read return data, by setting the signal code appropriately.

One skilled in the art, will recognize, from the examples of the above embodiments that a configuration format may be similarly encoded to provide functionality for the inbound link layer to convey configuration information.

These embodiments are described in sufficient detail to enable those skilled in the art to practice the invention, and it is to be understood that other embodiments may be utilized and that logical, mechanical, electrical, and other changes may be made without departing from the scope of the present invention. It is to be appreciated that the architecture and functionality described above may have other embodiments. Any of the formats, commands, etc. may have different bit assignments as well as different definitions for bits. For example, the read return header format may have different bit assignments as well as different definitions for bits and the order may be big endian rather than little endian.

Additionally, while for sake of clarification in the description some aspects of the present invention where described in embodiments with respect to inbound and outbound directions, it is to be understood that they may be applicable to both inbound and outbound. For example, link layer data that may be associated with a particular transfer within a flit may be temporally displaced from the respective transfer and this transfer may be in an inbound and/or outbound direction. For example, PMI 308 may issue a header that is sent via the link layer to the XMI 322 in advance (by an offset) of the information.

A machine-readable medium is understood to include any mechanism for storing or transmitting information in a form readable by a machine (e.g., a computer). For example, a machine-readable medium includes read only memory (ROM); random access memory (RAM); magnetic disk storage media; optical storage media; flash memory devices; electrical, optical, acoustical or other form of propagated signals (e.g. carrier waves, infrared signals, digital signals, etc.); etc.

It is understood by those knowledgeable in the art, that an implementation using a computer may require, at power up or reset that the computer configure itself properly before performing a method or task as an apparatus. This is normally referred to as initialization and may include, but is not limited to, setting timings of chips, determining devices attached, configuring subsystems, such as memory, checking accessing speeds, checking interconnects, etc. What is to be understood is that in preparation for fully functional operation, a computer system may perform many checks, set many parameters, etc. For example, a computer may, at initialization, determine attached memory and vary settings and parameters to determine the optimum interface speeds, timing settings, etc. Additionally, the computer while operating may also perform checks to assure proper operation and if necessary change settings, etc.

Thus, a method and apparatus for the optimization of memory read operations via a sideband read return header have been described.

## Claims

1. A method comprising:
receiving (654) a first part of a read request from a processor module;
initiating (658) a read in response to the first part of the read request;
receiving results from the read;
receiving (660) a remaining part of the read request; **characterized by**
sending (656) a read return header to the processor module to enable the processor module to prepare for receipt of read data in response to the read request;
sending (662) the read results to the processor module, wherein the read return header is sent to the processor module in advance of sending the read results, wherein
the read request preempts an earlier received write request of a write packet and the read is performed ahead of the write if it is determined that the read request is complete and that the write packet is not complete.

2. The method according to claim 1, wherein the read return header is sent in a sideband.

3. The method according to claim 2, wherein the time in advance is determined at initialization.

4. A method according to claim 1, wherein:
a read return header is sent in advance of receiving results from the read.

5. The method according to claim 4, wherein the read return header is sent in a sideband.

6. The method according to claim 5, wherein the time in advance is determined at initialization.

7. A processor system memory system interface (320) comprising:
a memory system output coupled to send the read data to the processing system source via a first link; and
a memory system input coupled to receive a read request from a processor system source and to begin accessing a memory in response to a part of the read request and before the read request is completely received **characterized by**
a memory system control output (338) coupled to send a read return header to the source in advance of sending read data via a second link and in that
the read request preempts an earlier received write request of a write packet and the read is performed ahead of the write if it is determined that the read request is complete and that the write packet is not complete.

8. The processor system memory system interface of claim 7, further comprising:
a memory system control input coupled to receive memory control signals from the processor system source.

9. The processor system memory system interface of claim 8, wherein the data sent to the processor system source via the first link is sent after the memory control signals sent to the processor system source via the second link.

10. The processor system memory system interface of claim 8, wherein the first link and the second link are not the same link.

11. The processor system memory system interface of claim 7, wherein
the memory system input comprises means for receiving a read request;
the memory system control output comprises means for sending a read return header;
and
the memory system output comprises means for sending read data.

12. The processor system memory system interface of claim 11, wherein means for sending the read return header is not the same as means for sending read data.

13. The processor system memory system interface of claim 11, wherein means for sending read data further comprises
means for sending read return data in a read return data path at the same data rate memory read data rate.

14. The processor system memory system interface of claim 13, wherein the read return data rate and the memory read data rate are the same as an external memory interface data rate.

15. The processor system memory system interface of claim 14, wherein there is no multiplexing of the memory read data in the read return data path.

16. A machine-readable medium having store thereon instructions, which when executed by a system, causes said system to perform all steps of the method of claim 1.

17. The machine-readable medium according to claim 16, wherein the read return header is sent to the source via a different link than the data.

18. A system comprising:
a processor (310) capable of issuing a read request, a write request, and control information; and
a memory interface device (308) coupled to the processor and a memory (340, 342), wherein the memory interface device receives a read request, and control information, sends to the processor data from the memory, and initiates a read to read data associated with the read request from the memory, before the read request is completely received, **characterized in that** control signals that are sent to the processor before the data from the memory is sent to the processor, and
**in that** the read request preempts an earlier received write request of a write packet and the read is performed ahead of the write if it is determined that the read request is complete and that the write packet is not complete.

19. The system of claim 18, wherein the data from the memory and the control signals are sent to the processor via different links.

## Patentansprüche

1. Verfahren, umfassend:
Empfangen (654) eines ersten Teils einer Leseanforderung von einem Prozessormodul;
Initiieren (658) eines Lesens in Reaktion auf den ersten Teil der Leseanforderung; Empfangen von Ergebnissen von dem Lesen;
Empfangen (660) eines restlichen Teils der Leseanforderung; **gekennzeichnet durch**
Senden (656) eines Lese-Return-Headers zum Prozessormodul, um das Prozessormodul in die Lage zu versetzen, sich auf einen Empfang von Lesedaten in Reaktion auf die Leseanforderung vorzubereiten;
Senden (662) der Leseergebnisse zum Prozessormodul, wobei der Lese-Return-Header zum Prozessormodul vor einem Senden der Leseergebnisse gesendet wird, wobei die Leseanforderung einer früher empfangenen Schreibanforderung eines Schreibpakets zuvorkommt und das Lesen vor dem Schreiben ausgeführt wird, wenn bestimmt wurde, daß die Leseanforderung vollständig ist und daß das Schreibpaket nicht vollständig ist.

2. Verfahren nach Anspruch 1, wobei der Lese-Return-Header in einem Seitenband gesendet wird.

3. Verfahren nach Anspruch 2, wobei die Zeit im voraus bei der Initialisierung bestimmt wird.

4. Verfahren nach Anspruch 1, wobei ein Lese-Return-Header vor einem Empfangen von Ergebnissen von dem Lesen gesendet wird.

5. Verfahren nach Anspruch 4, wobei der Lese-Return-Header in einem Seitenband gesendet wird.

6. Verfahren nach Anspruch 5, wobei die Zeit im voraus bei einer Initialisierung bestimmt wird.

7. Prozessorsystem-Speichersystemschnittstelle (320), umfassend:
einen Speichersystemausgang, der angeschlossen ist, um die Lesedaten zur Verarbeitungssystemquelle über eine erste Verbindung zu senden; und
einen Speichersystemeingang, der angeschlossen ist, um eine Leseanforderung von einer Prozessorsystemquelle zu empfangen und ein Zugreifen auf einen Speicher in Reaktion auf einen Teil der Leseanforderung und, bevor die Leseanforderung vollständig empfangen ist, zu beginnen, **gekennzeichnet durch**
einen Speichersystemsteuerausgang (338), der angeschlossen ist, um einen Lese-Return-Header zur Quelle vor einem Senden von Lesedaten über eine zweite Verbindung zu senden und **dadurch gekennzeichnet, daß**
die Leseanforderung einer früher empfangenen Schreibanforderung eines Schreibpakets zuvorkommt und das Lesen vor dem Schreiben ausgeführt wird, wenn bestimmt wurde, daß die Leseanforderung vollständig ist und daß das Schreibpaket nicht vollständig ist.

8. Prozessorsystem-Speichersystemschnittstelle nach Anspruch 7, welche des weiteren umfaßt:
einen Systemspeichersteuereingang, der angeschlossen ist, um Speichersteuersignale von der Prozessorsystemquelle zu empfangen.

9. Prozessorsystem-Speichersystemschnittstelle nach Anspruch 8, wobei die über die erste Verbindung zur Prozessorsystemquelle gesendeten Daten gesendet werden, nachdem die Speichersteuersignale zur Prozessorsystemquelle über die zweite Verbindung gesendet wurden.

10. Prozessorsystem-Speichersystemschnittstelle nach Anspruch 8, wobei die erste Verbindung und die zweite Verbindung nicht dieselbe Verbindung sind.

11. Prozessorsystem-Speichersystemschnittstelle nach Anspruch 7, wobei der Speichersystemeingang Mittel zum Empfangen einer Leseanforderung aufweist;
der Speichersystemsteuerausgang Mittel zum Senden eines Lese-Return-Headers aufweist; und
der Speichersystemausgang Mittel zum Senden von Lesedaten aufweist.

12. Prozessorsystem-Speichersystemschnittstelle nach Anspruch 11, wobei
Mittel zum Senden des Lese-Return-Headers nicht dieselben Mittel wie die Mittel zum Senden von Lesedaten sind.

13. Prozessorsystem-Speichersystemschnittstelle nach Anspruch 11, wobei die Mittel zum Senden von Lesedaten des weiteren Mittel zum Senden von Lese-Retum-Daten in einem Lese-Return-Datenweg bei derselben Datenrate-Speicherlesedatenrate umfaßt.

14. Prozessorsystem-Speichersystemschnittstelle nach Anspruch 13, wobei die Lese-Return-Datenrate und die Speicherlesedatenrate dieselben sind wie eine Datenrate einer externen Speicherschnittstelle.

15. Prozessorsystem-Speichersystemschnittstelle nach Anspruch 14, wobei es kein Multiplexen der Speicherdatenrate im Lese-Return-Datenweg gibt.

16. Maschinenlesbares Medium, das darauf gespeicherte Instruktionen aufweist, die, wenn sie von einem System ausgeführt werden, das System dazu veranlassen, alle Schritte des Verfahrens gemäß Anspruch 1 auszuführen.

17. Maschinenlesbares Medium nach Anspruch 16, wobei der Lese-Return-Header zur Quelle über eine andere Verbindung als die Daten gesendet wird.

18. System, umfassend:
einen Prozessor (310), der in der Lage ist, eine Leseanforderung, eine Schreibanforderung und Steuerungsinformationen auszugeben; und
eine Speicherschnittstellenvorrichtung (308), die mit dem Prozessor und einem Speicher (340, 342) gekoppelt ist, wobei die Speicherschnittstellenvorrichtung eine Leseanforderung und Steuerungsinformationen empfängt, zum Prozessor Daten vom Speicher sendet und ein Lesen zum Lesen von Daten initiiert, die mit der Leseanforderung vom Speicher verbunden sind, bevor die Leseanforderung vollständig empfangen wurde, **dadurch gekennzeichnet, daß** Steuerungssignale zum Prozessor gesendet werden, bevor die Daten vom Speicher zum Prozessor gesendet werden, und **dadurch**, daß
die Leseanforderung einer früher empfangenen Schreibanforderung eines Schreibpakets zuvorkommt und das Lesen vor dem Schreiben ausgeführt wird, wenn bestimmt wurde, daß die Leseanforderung vollständig ist und daß das Schreibpaket nicht vollständig ist.

19. System nach Anspruch 18, wobei die Daten vom Speicher und die Steuerungssignale zum Prozessor über unterschiedliche Verbindungen gesendet werden.

## Revendications

1. Procédé comportant les étapes consistant à :
recevoir (654) une première partie d'une demande de lecture en provenance d'un module de processeur,
initier (658) une lecture en réponse à la première partie de la demande de lecture,
recevoir des résultats de la lecture,
recevoir (660) une partie restante de la demande de lecture, **caractérisé par**
l'envoi (656) d'un en-tête de retour de lecture au module de processeur pour permettre au module de processeur de préparer la réception de données de lecture en réponse à la demande de lecture,
envoyer (662) les résultats de lecture au module de processeur, l'en-tête de retour de lecture étant envoyé au module de processeur avant l'envoi des résultats de lecture, procédé dans lequel
la demande de lecture anticipe une demande d'écriture reçue précédente d'un paquet d'écriture et la lecture est exécutée avant l'écriture s'il est déterminé que la demande de lecture est complète et que le paquet d'écriture n'est pas complet.

2. Procédé selon la revendication 1, dans lequel l'en-tête de retour de lecture est envoyé dans une bande latérale.

3. Procédé selon la revendication 2, dans lequel la durée à l'avance est déterminée à l'initialisation.

4. Procédé selon la revendication 1, dans lequel :
un en-tête de retour de lecture est envoyé avant la réception des résultats de la lecture.

5. Procédé selon la revendication 4, dans lequel l'en-tête de retour de lecture est envoyé dans une bande latérale.

6. Procédé selon la revendication 5, dans lequel la durée à l'avance est déterminée à l'initialisation.

7. Interface de système de mémoire de système de traitement (320) comportant :
une sortie de système de mémoire couplée pour envoyer les données de lecture à la source de système de traitement via une première liaison, et
une entrée de système de mémoire couplée pour recevoir une demande de lecture en provenance d'une source de système de traitement et pour commencer à accéder à une mémoire en réponse à une partie de la demande de lecture et avant que la demande de lecture soit complètement reçue **caractérisée par**
une sortie de commande de système de mémoire (138) couplée pour envoyer un en-tête de retour de lecture à la source avant d'envoyer les données de lecture via une seconde liaison et en ce que
la demande de lecture anticipe une demande d'écriture reçue précédente d'un paquet d'écriture et la lecture est exécutée avant l'écriture s'il est déterminé que la demande de lecture est complète et que le paquet d'écriture n'est pas complet.

8. Interface de système de mémoire de système de traitement selon la revendication 7, comportant en outre :
une entrée de commande de système de mémoire couplée pour recevoir des signaux de commande de mémoire en provenance de la source de système de traitement.

9. Interface de système de mémoire de système de traitement selon la revendication 8, dans laquelle les données envoyées à la source de système de traitement via la première liaison sont envoyées après les signaux de commande de mémoire envoyés à la source de système de traitement via la seconde liaison.

10. Interface de système de mémoire de système de traitement selon la revendication 8, dans laquelle la première liaison et la seconde liaison ne sont pas la même liaison.

11. Interface de système de mémoire de système de traitement selon la revendication 7, dans laquelle
l'entrée de système de mémoire comporte des moyens pour recevoir une demande de lecture,
la sortie de commande de système de mémoire comporte des moyens pour envoyer un en-tête de retour de lecture, et
la sortie de système de mémoire comporte des moyens pour envoyer des données de lecture.

12. Interface de système de mémoire de système de traitement selon la revendication 11, dans laquelle des moyens pour envoyer l'en-tête de retour de lecture ne sont pas les mêmes que des moyens pour envoyer des données de lecture.

13. Interface de système de mémoire de système de traitement selon la revendication 11, dans laquelle des moyens pour envoyer des données de lecture comportent en outre des moyens pour envoyer des données de retour de lecture dans un trajet de données de retour de lecture au même débit de données que le débit de données de lecture de mémoire.

14. Interface de système de mémoire de système de traitement selon la revendication 13, dans laquelle le débit de données de retour de lecture et le débit de données de lecture de mémoire sont les mêmes qu'un débit de données d'interface de mémoire externe.

15. Interface de système de mémoire de système de traitement selon la revendication 14, dans laquelle il n'y pas de multiplexage des données de lecture de mémoire dans le trajet de données de retour de lecture.

16. Support lisible par machine sur lequel des instructions sont mémorisées, qui, lorsqu'exécutées par un système, amènent ledit système à exécuter toutes les étapes du procédé de la revendication 1.

17. Support lisible par machine selon la revendication 16, dans lequel l'en-tête de retour de lecture est envoyé à la source via une liaison différente de celle des données.

18. Système comportant :
un processeur (310) capable d'émettre une demande de lecture, une demande d'écriture, et des informations de commande, et
un dispositif d'interface de mémoire (308) couplé au processeur et une mémoire (340, 342), dans lequel le dispositif d'interface de mémoire reçoit une demande de lecture, et des informations de commande, envoie au processeur des données depuis la mémoire, et initie une lecture pour des données de lecture associées à la demande de lecture depuis la mémoire, avant que la demande de lecture soit complètement reçue, **caractérisé en ce que** des signaux de commande qui sont envoyés au processeur avant les données depuis la mémoire sont envoyés au processeur, et
**en ce que** la demande de lecture anticipe une demande d'écriture reçue précédente d'un paquet d'écriture et la lecture est exécutée avant l'écriture s'il est déterminé que la demande de lecture est complète et que le paquet d'écriture n'est pas complet.

19. Système selon la revendication 18, dans lequel les données provenant de la mémoire et les signaux de commande sont envoyés au processeur via des liaisons différentes.
